# EUROPÄISCHE PATENTSCHRIFT

(11) **EP 2 153 879 B1**
(45) Veröffentlichungstag und Bekanntmachung des Hinweises auf die Patenterteilung: **17.07.2013**
(21) Anmeldenummer: 08014024.7
(22) Anmeldetag: 05.08.2008
(51) Int. Cl.: B01D 53/26, B01D 5/00, B01D 53/00

(54) **Gasabtrennung mittels mehrstufiger Kondensation**
Gas separation by means of multi-stage condensation
Séparation des gaz par condensation en plusieurs étapes

(43) Veröffentlichungstag der Anmeldung: 17.02.2010
(73) Patentinhaber: Siemens Aktiengesellschaft, 80333 München (DE)
(72) Erfinder: Tielcke, Udo, 90455 Nürnberg (DE)

(56) Entgegenhaltungen:
- DE-A1- 1 551 571
- DE-A1- 4 313 574
- FR-A- 1 347 558
- US-A1- 2004 060 446
- US-A1- 2007 227 186

## Beschreibung

Die Erfindung betrifft das technische Gebiet der Abtrennung eines Gases aus einem Gasgemisch, welches neben der Sorte des abzutrennenden Gases zumindest noch eine weitere Gassorte aufweist. Die vorliegende Erfindung betrifft insbesondere die Abtrennung von nichtkondensierbaren Gasen aus einem Wasserdampf Kreislauf.

Bei der Verbrennung von fossilen Brennstoffen wie beispielsweise Erdgas werden große Mengen an Kohlendioxid (CO2) freigesetzt, die in bekannter Weise zum Treibhauseffekt in der Erdatmosphäre beitragen. Um die daraus resultierenden Veränderungen des Erdklimas in Grenzen zu halten, ist es erforderlich, den CO2 Ausstoß insbesondere aus Kraftwerken zur Stromerzeugung zu reduzieren.

Ein aus energetischer Sicht besonders vorteilhafter Verbrennungsprozess ist der sog. Oxyfuel-Prozess. Bei diesem wird Erdgas mit dem Hauptbestandteil Methan CH4 mit reinem Sauerstoff (02) in einer Hochtemperaturbrennkammer unter Hinzufügung von reinem Wasser (H2O) als Temperaturregulator verbrannt. Dadurch wird Wasserdampf mit hoher Temperatur und hohem Druck mit einem reinen, leicht abtrennbaren und regulierbaren Bestandteil Kohlendioxyd (CO2) erzeugt.

Eine wirksame Methode zur Reduzierung des CO2 Ausstoßes ist die sog. CO2-Sequestrierung. Darunter versteht man die Deponierung von CO2, das beispielsweise in Gaskraftwerken im Rahmen einer Stromerzeugung mittels Gasturbinen entstanden ist. Die Sequestrierung ist ein Teil des sog. CCS-Prozesses (Carbon Dioxide Capture and Storage Prozess) zur CO2 armen Nutzung fossiler Rohstoffe bei der Stromerzeugung. Dabei soll das CO2 aus der Verbrennung fossiler Energieträger aus der Abluft eines Kraftwerkes abgetrennt und danach eingelagert werden, so dass es nicht in die Atmosphäre gelangt und seine negativen Eigenschaften in Bezug auf den Treibhauseffekt nicht zur Entfaltung kommen. Als mögliche CO2-Speicherstätten werden derzeit geologische Formationen wie Erdöllagerstätten, Erdgaslagerstätten, salzhaltige Grundwasserleiter und Kohleflöze sowie eine Einlagerung in der Tiefsee diskutiert. Im Zusammenhang mit der Einlagerung von CO2 in der Tiefsee ist es von Bedeutung, dass CO2 in der flüssigen Form schwerer ist als Seewasser und dass sich CO2 nicht mit dem Wasser der Tiefsee vermischt. Versuche in Wassertiefen von 3500 m haben die Richtigkeit der Annahme bestätigt.

Um diese Speicherstätten effektiv nutzen zu können, ist in der Regel vor der Einlagerung des CO2 eine Verflüssigung erforderlich, welche durch eine großtechnisch durchgeführte Kompression des aus der Verbrennungsabluft abgetrennten CO2 durchgeführt werden kann. Dabei wird das abgetrennte Gas bei gleichzeitiger Kühlung so stark komprimiert, dass es in den flüssigen Aggregatszustand übergeht und somit der Volumenbedarf des abgetrennten CO2 erheblich reduziert ist.

Der vorliegenden Erfindung liegt die Aufgabe zugrunde, ein Verfahren zum Abtrennen eines Gases aus einem Gasgemisch anzugeben, welche im Rahmen einer großtechnischen Anwendung eine effektive Gasabtrennung ermöglichen.

Diese Aufgabe wird gelöst durch die Gegenstände des unabhängigen Patentanspruchs . Vorteilhafte Ausführungsformen der vorliegenden Erfindung sind in den abhängigen Ansprüchen beschrieben.

Dem Verfahren liegt die Erkenntnis zugrunde, dass durch eine zweistufige Kondensation des zweiten Gases, bzw. der zweiten Gaskomponente Wasser das erste Gas, bzw. die erste Gaskomponente Kohlendioxid, in einer besonders hohen Reinheit abgeschieden werden kann. Bei den beiden beschriebenen Kondensationsvorgängen wird das zweite Gas weitestgehend in den flüssigen Aggregatszustand übergeführt.

Infolge des Unterschiedes zwischen dem ersten Arbeitsdruck in der ersten Verflüssigungseinrichtung, welche auch als erster Dampfkondensator bezeichnet werden kann, und dem zweiten Arbeitsdruck in der zweiten Verflüssigungseinrichtung, welche auch als zweiter Dampfkondensator bezeichnet werden kann, erfolgt die Weiterleitung des Zwischengasgemisches automatisch oder zumindest mit Unterstützung dieser Druckdifferenz. Die Separation der Gase folgt den Gesetzmäßigkeiten der Partialdrücke der einzelnen Gaskomponenten. Hierbei ist zu beachten, dass sich H2O nicht oder nur sehr schwer mit CO2 vermischt und H2O in Gasform einen wesentlich unterschiedlichen Taupunkt hat als andere Gase, wie zum Beispiel CO2, Argon oder Stickoxide (NOx).

Bevorzugt wird das in der ersten Verflüssigungseinrichtung zweite Gas, welches nachfolgend auch als erstes Kondensat bezeichnet wird, mittels einer Pumpe abgeführt. Das abgepumpte erste Kondensat kann dann ggf. noch für andere Prozessschritte wie beispielsweise einem in einem Wärmetauscher oder einem regenerativen Enthitzer verwendet werden.

Auch das in der zweiten Verflüssigungseinrichtung kondensierte zweite Gas, welches nachfolgend auch als zweites Kondensat bezeichnet wird, kann mittel einer Pumpe abgeführt werden. Auch das abgepumpte zweite Kondensat kann ggf. noch für andere Prozessschritte wie beispielsweise einem Wärmeaustausch in einem Wärmetauscher oder einem regenerativen Enthitzer verwendet werden. Auch ist ein Zusammenführen und damit eine gemeinsame Nutzung des ersten und des zweiten Kondensats möglich.

Das zweite Gas kann auch ein Dampf sein, welche neben einigen gasförmigen Komponenten auch flüssige ggf. bereits kondensierte Anteile aufweist. In diesem Zusammenhang wird als Dampf ein Gas bezeichnet, das im Allgemeinen noch in Kontakt mit der flüssigen Phase steht. Die flüssige Phase kann dabei in dem entsprechenden Gasvolumen homogen oder inhomogen verteilt sein.

Das zweite Gas kann ggf. auch eine Zusammensetzung aus Wasser und verschiedenen anderen Gasen wie NOx und Argon sein, die im Vergleich zu der Taupunktkennlinie des ersten Gases eine signifikant unterschiedliche Taupunktkennlinie aufweisen. Auf diese Weise kann der Kondensationsvorgang für die jeweilige Gaszusammensetzung als ein einheitlicher Prozess betrachtet werden.

Das beschriebene Gasabtrennungsverfahren hat den Vorteil, dass es in einer großtechnischen Anlage kosteneffizient durchgeführt werden kann. Damit eignet sich das beschriebene Verfahren insbesondere für Prozesse, in denen Gasturbinen wie beispielsweise Gasexpander in Kombination mit herkömmlichen Dampfturbinen im Verbund arbeiten. Voraussetzung ist hierbei, dass das Wasserdampf-Gasgemisch in allen Phasen der Wasserdampf-Gasentspannung in den Turbinenteilen stets über dem Taupunkt der Gase liegt, um unter anderem auch Korrosionen über den Luftsauerstoff zu vermeiden. Hohe Temperaturabstände zu der oder den Taupunktlinien der einzelnen Gaskomponenten, auch im Druckbereich weit unter dem atmosphärischen Druck, sind für eine effektive Gasabtrennung von Vorteil.

Gemäß einem weiteren Ausführungsbeispiel der Erfindung erfolgt das Kondensieren eines Teils des zweiten Gases und/oder das Kondensieren zumindest eines weiteren Teils des zweiten Gases an einer gekühlten Oberfläche. Dies hat den Vorteil, dass bei dem ersten und/oder dem zweiten Kondensationsprozess abgesehen von Pumpen, mit denen ein Kühlmedium, insbesondere eine Kühlflüssigkeit, bereitgestellt wird, keine weiteren mechanisch beweglichen Komponenten für den jeweiligen Kondensationsvorgang erforderlich sind.

Durch unterschiedliche Aufwärmspannen der Kühlflüssigkeit in den jeweiligen separaten Kondensatorsektionen und den vorgegebenen Temperaturdifferenzen zwischen Kondensattemperatur und Kühlflüssigkeit, kann dabei ein unterschiedlicher Druck aufgebaut werden.

Gemäß der Erfindung ist der erste Druck und der zweite Druck niedriger als ein Umgebungsdruck. Dies hat den Vorteil, dass bezogen auf den Arbeitsdruck die Prozessbedingungen für den ersten und zweiten Kondensationsprozess auf einfache Weise durch einen einfachen Abpumpvorgang erreicht werden können. Dabei kann insbesondere gegenüber dem Luftdruck der Umgebung eine Druckreduzierung innerhalb der ersten Verflüssigungseinrichtung und der zweiten Verflüssigungseinrichtung erreicht werden.

Der Unterdruck gegenüber dem angenommenen atmosphärischen Druck der Umgebung kann über die Saugwirkung eines angeschlossenen Gasverdichters oder einer Pumpe für das zweite Gas oder das Restgasgemisches hergestellt werden. Die Gasmengenregelung und der damit erzeugte Unterdruck kann dabei über eine Gasdruckregelstation gesteuert werden.

Die entsprechenden Pumpen sollten dabei hinsichtlich ihrer Saugwirkung so eingestellt werden, dass aus der jeweiligen Verflüssigungseinrichtung bevorzugt lediglich Flüssigkeit bzw. das jeweilige Kondensat und möglichst wenig von gasförmigen Stoffen abgezogen werden.

Gemäß einem weiteren Ausführungsbeispiel der Erfindung weist das Verfahren zusätzlich ein Komprimieren des abgeschiedenen ersten Gases auf.

Durch eine ausreichend starke Kompression beispielsweise mittels herkömmlicher Kompressorstationen mit ihren entsprechenden Kühlstufen und den vorgesehenen Gasreinigungsstufen kann das erste Gas verflüssigt werden. Falls das erste Gas ein zumindest in der gasförmigen Phase für die Umwelt schädlicher Stoff ist, dann kann durch die beschriebene Verflüssigung die Volumenmenge dieses Stoffes erheblich reduziert und somit eine Entsorgung realisiert werden. Selbstverständlich ist bei einer derartigen Hochdruckversorgung darauf zu achten, dass ein für das Aufrechterhalten der flüssigen Phase erforderlicher Mindestdruck erhalten bleibt.

Für einen Kompressor, mit dem das abgeschiedene erste Gas komprimiert wird, gilt das gleiche wie für die oben beschriebenen Pumpen zum Erzeugen eines Unterdrucks in der jeweiligen Verflüssigungseinrichtung: Die von dem Kompressor generierte Saugwirkung sollte nicht so groß sein, dass das in der zweiten Verflüssigungseinrichtung erzeugte zweite Kondensat mit aus einem Prozessraum der zweiten Verflüssigungseinrichtung angesaugt wird.

Gemäß der Erfindung wird das Gasgemisch aus einem regenerativen Enthitzer der ersten Verflüssigungseinrichtung zugeführt.

Der regenerative Enthitzer, welcher insbesondere nach dem bekannten Prinzip eines Wärmetauschers arbeiten kann, kann insbesondere einer Dampfturbine oder einer Gasturbine nachgeschaltet sein. Zum Betrieb des regenerativen Enthitzers und damit für einen Wärmetauschprozess, bei dem der Abdampfstrom der Dampfturbine, insbesondere einer Wasserdampfturbine, abgekühlt wird, kann beispielsweise das erste Kondensat und/oder das zweite Kondensat verwendet werden.

Gemäß einem weiteren Ausführungsbeispiel der Erfindung weist das Verfahren zusätzlich auf (a) ein Weiterleiten des abgeschiedenen ersten Gases zu einer dritten Verflüssigungseinrichtung, wobei an dem abgeschiedenen ersten Gas zumindest noch ein Teil des zweiten Gases anhaftet, (b) ein Kondensieren zumindest eines Teils des zweiten Gases in der dritten Verflüssigungseinrichtung bei einem dritten Druck, welcher kleiner ist als der zweite Druck, und (c) ein Abtrennen des ersten Gases von dem in der dritten Verflüssigungseinrichtung kondensierten zweiten Gas.

Die beschriebene dritte Kondensation hat den Vorteil, dass das erste Gas in einer noch größeren Reinheit abgeschieden werden kann. Selbstverständlich kann das beschriebene Gasabtrennungsverfahren auch noch in mehr als drei Kondensationsstufen durchführt werden, wobei der Reinheitsgrad des abgeschiedenen Gases abgesehen von unerwünschten Verschmutzungseffekten typischerweise mit jeder Kondensationsstufe zunimmt.

Es wird darauf hingewiesen, dass mehrere Kondensationsstufen, insbesondere erzeugt durch Kompression und Abkühlung, auch dazu verwendet werden können, um mehr als eine Gassorte von einem Gasgemisch aus verschiedenen Gasen abtrennen zu können. Dabei können die Prozessparameter wie insbesondere die Temperatur und der Druck der einzelnen Kondensationsprozesse abhängig von den Taupunkten der verbleibenden Gase derart eingestellt werden, dass eine möglichst optimale Abtrennung bereits mit einer einzigen für das jeweilige Gas optimierten Kondensationsstufe erreicht wird.

Das zweite Gas, gasförmiges Wasser, welche chemisch durch die Formel H2O beschrieben wird, kann insbesondere ein Wasserdampf sein. Dieser ist in seinem Aggregatszustand in der Regel genauso unsichtbar wie Luft.

Das zweite Kondensat, welches ausgehend von dem gasförmigen Wasser in der ersten Verflüssigungseinrichtung und/oder in der zweiten Verflüssigungseinrichtung erzeugt wird, kann beispielsweise einem in einer Gasturbine stattfindenden Verbrennungsprozess zugeführt werden, um eine unerwünschte Überhitzung der Gasturbine oder zumindest von Teilen der Gasturbine zu vermeiden. Dieser Prozess, mit dem die Gasturbine vor Beschädigungen geschützt werden kann, wird auch als Abspritzen bezeichnet. Dieses Abspritzen ist insbesondere im Zusammenhang mit der Verbrennung von Erdgas im Rahmen eines o. g. Oxyfuel Prozesses relevant.

Das erste abzutrennende Gas ist Kohlendioxid (CO2), welches über die Verbrennung von Erdgas mit fast 100% Methan (CH4) mit reinem Sauerstoff (02) entstehen kann. Da jedoch nicht alle zur Anwendung kommenden Erdgasvorkommen einen fast 100%igen Methangas Anteil aufweisen, ist es von großem Vorteil, dass das mit dieser Anmeldung beschriebene Gasabtrennungsverfahren auch mit anderen Gassorten durchgeführt werden kann. So weisen viele Erdgasvorkommen hohe Anteile an Stickstoff (N2) bis zu 25%, Schwefel und/oder Argon auf. Diese Anteile bleiben in Trennverfahren als nicht kondensierbare Gasanteile in möglichen Formen wie NOx, Ammoniak, Schwefelwasserstoff bestehen und werden zusammen mit dem vorwiegendem Anteil Kohlendioxydgas mit abgetrennt. Die erforderliche Reinheit der abzuziehenden Gase oder Restgasmischungen aus den verschiedenen Gaskomponenten können über bekannte Gasseparationsverfahren, die nach der ersten Verdichterstufe angeschlossen ist, erzielt werden.

Das beschriebene Verfahren eine große umweltpolitische Bedeutung. Das für den sog. Treibhauseffekt hauptsächlich verantwortliche CO2, welches bei der Verbrennung von fossilen Brennstoffen wie Erdgas oder Erdöl zwangsläufig entsteht, kann aus der Verbrennungsabluft ausgesondert insbesondere nach einer Verflüssigung mittels einer geeigneten Kompression entsorgt werden. Diese Entsorgung kann beispielsweise in den Weltmeeren in großen Tiefen oder in Erdgas- oder Erdöllagerstätten ebenfalls in großer Tiefe stattfinden, wo ein derart großer Druck herrscht, dass das verflüssigte CO2 nicht wieder in die gasförmige Phase übergeht. Im Zusammenhang mit einer Entsorgung in großen Meerestiefen ist es dabei von großer Bedeutung, dass verflüssigtes CO2 schwerer ist als Wasser, so dass es automatisch bis auf den Meeresboden absinkt.

Gemäß einem weiteren Ausführungsbeispiel der Erfindung wird das Gasgemisch durch eine Verbrennung von Oxyfuel erzeugt. Bei dieser Art von Verbrennung, welche nach dem Prinzip eines Raketenantriebs erfolgt, wird dem zu verbrennenden Gas Sauerstoff zugeführt. Bei dem nachfolgenden hocheffizienten Verbrennungsvorgang, welcher durch die chemische Gleichung

CH4 + 2 02 --> CO2 + 2 H2O

beschrieben wird, wird somit neben Wasserdampf eine große Menge an CO2 ausgestoßen. Der Volumenstrom an CO2 in dem Gasgemisch aus CO2 und H2O beträgt dabei typischerweise ca. 10 bis 15%.

Das Oxyfuel-Verfahren an sich ist ein Verbrennungsverfahren, bei dem besonders hohe Flammentemperaturen erreicht werden können. Es ist sowohl für gasförmige als auch für flüssige und feste Brennstoffe anwendbar. Feste Brennstoffe müssen allerdings in einem separaten Vergasungsprozess, ähnlich der bekannten Kohlevergasung, in Gas umgewandelt werden. Im Gegensatz zur konventionellen Verbrennung mit Luft soll der Brennstoff mit reinem Sauerstoff unter Hinzuführung von Wasser, zu Wasserdampf mit definierbaren Kohlendioxidgasanteilen sowie weiteren NOx-Gasanteilen, Argongasanteilen und anderen Gasteilen, die je nach Brennstoffverunreinigungen entstehen, in einem exothermen Prozess umgewandelt werden. Um die resultierende Flammentemperatur beeinflussen und um Beschädigungen beispielsweise an einer Gasturbine ausschließen zu können, kann, wie oben beschrieben, eine bestimmte Menge an kondensiertem H2O rezirkuliert, d.h. mit dem zu verbrennenden Gas und dem Sauerstoff zusammen in die Brennkammer eingeblasen werden. Daher ist zu beachten, dass das rezirkulierte Wasser nach dem Enthitzer möglichst gut von den CO2 Gasbestandteilen gereinigt ist, da CO2 bekannter Weise als Inertgas wirkt und somit die Verbrennung in der Brennkammer negativ beeinflusst.

Weitere Vorteile und Merkmale der vorliegenden Erfindung ergeben sich aus der folgenden beispielhaften Beschreibung derzeit bevorzugter Ausführungsformen.
- Figur 1: zeigt eine Gasabtrennungsvorrichtung mit einer ersten Verflüssigungseinrichtung und einer der ersten Verflüssigungseinrichtung nachgeschalteten zweiten Verflüssigungseinrichtung.
- Figur 2: zeigt die in Figur 1 dargestellte Gasabtrennungsvorrichtung in einer Querschnittsdarstellung.

An dieser Stelle wird darauf hingewiesen, dass sich in der Zeichnung die Bezugszeichen von gleichen oder von einander entsprechenden Komponenten lediglich in ihrer ersten Ziffer voneinander unterscheiden.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

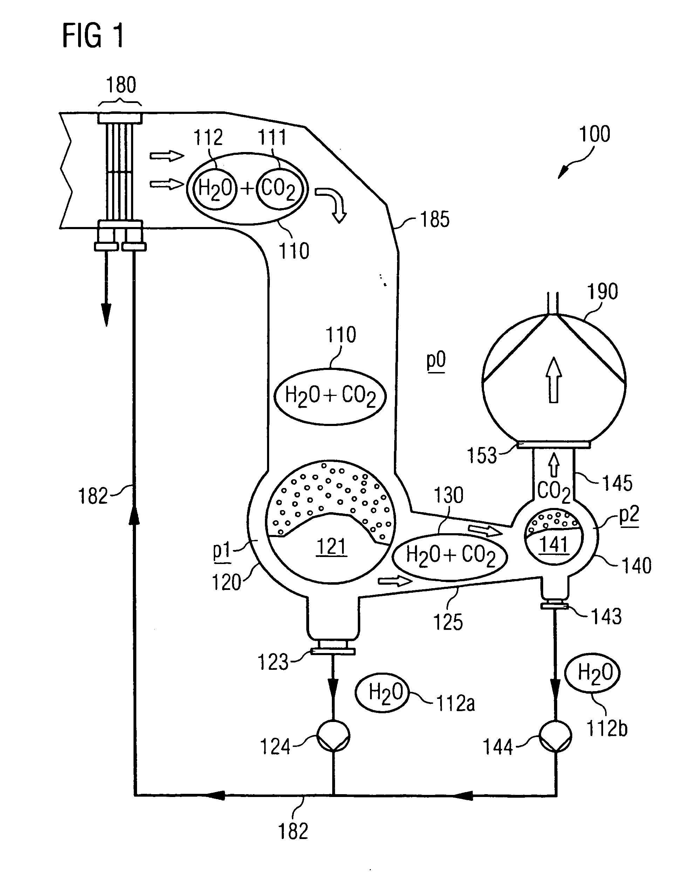

Figur 1 zeigt eine Gasabtrennungsvorrichtung 100. Gemäß dem hier dargestellten Ausführungsbeispiel ist die Gasabtrennungsvorrichtung 100 einem regenerativen Enthitzer 180 nachgeschaltet. Der regenerative Enthitzer 180 ist wiederum einer nicht dargestellten Wasserdampf- oder Gasturbine nachgeschaltet, welche mit dem oben beschriebenen Brennstoff Oxyfuel betrieben wird.

Bei der Verbrennung des Oxyfuel entsteht am Ausgang der Wasserdampf- oder Gasturbine bzw. am Ausgang des regenerativen Enthitzers 180 ein Gasgemisch 110, welches als erstes Gas 111 Kohlendioxid (CO2) und als zweites Gas 112 Wasserdampf (H2O) enthält. Wie aus Figur 1 ersichtlich, wird dieses Gasgemisch 110 über eine Rohrleitung 185 einer ersten Verflüssigungseinrichtung 120 zugeführt. Gemäß dem hier dargestellten Ausführungsbeispiel ist die erste Verflüssigungseinrichtung ein sog. Dampfkondensator 120, welcher nachfolgend auch kurz als Hauptkühler bezeichnet wird.

In dem Hauptkühler 120 kondensiert ein Teil des Wasserdampfes an einer gekühlten Oberfläche 121. Der Kondensationsvorgang erfolgt bei einem Arbeitsdruck p1. Gemäß dem hier dargestellten Ausführungsbeispiel ist der Druck p1 kleiner als ein Umgebungsluftdruck p0.

Bei dem Kondensationsvorgang entsteht als erstes Kondensat 112a flüssiges Wasser, welches über eine Auslassöffnung 123 und über eine Pumpe 124 einer Rückführleitung 182 zugeführt wird. Wie aus Figur 1 ersichtlich, mündet diese Rückführleitung in den regenerativer Enthitzer 180, wo es dem Gasgemisch 110 im Rahmen eines Wärmetauschprozesses Wärme entziehen kann. Nach dem regenerativer Enthitzer 180 kann das zumindest etwas erwärmte Wasser 112a dem Verbrennungsprozess des Oxyfuel in der Gasturbine zugeführt werden. Wie oben bereits erläutert kann ein derartiges Abspritzen des Verbrennungsprozesses dazu dienen, die Dampf- oder Gasturbine vor thermischen Beschädigungen durch die durch das Oxyfuel verursachten hohen Temperaturen zu schützen.

Nachdem durch den ersten Kondensationsprozess dem Gasgemisch 110 bereits eine signifikante Menge an Wasser 112a entzogen worden ist, wird das dadurch entstandene Zwischengemisch 130 über ein als Rohrleitung ausgebildetes Verbindungselement 125 einer zweiten Verflüssigungseinrichtung 140 zugeführt. Gemäß dem hier dargestellten Ausführungsbeispiel ist die zweite Verflüssigungseinrichtung ebenfalls ein sog. Dampfkondensator 140, welcher nachfolgend auch kurz als Nachkühler bezeichnet wird.

In dem Nachkühler 120 kondensiert erneut zumindest ein Teil des in dem Zwischengemisch 130 verbliebenen Wasserdampfes an einer gekühlten Oberfläche 141. Der zweite Kondensationsvorgang erfolgt bei einem Arbeitsdruck p2. Gemäß dem hier dargestellten Ausführungsbeispiel ist der Druck p2 kleiner als der Arbeitsdruck p1 innerhalb des Hauptkühlers 120, so dass das Zwischengemisch 130 automatisch entsprechend dem Verlauf des Druckgradienten in den Nachkühler 140 transferiert wird.

Bei dem zweiten Kondensationsvorgang entsteht als zweites Kondensat 112b erneut flüssiges Wasser, welches über eine Auslassöffnung 143 und über eine Pumpe 144 der bereits oben beschriebenen Rückführleitung 182 zugeführt wird.

Nach dem zweiten Kondensationsvorgang ist von dem Zwischengas 130 praktisch nur noch Kohlendioxid als gasförmiger Stoff übrig. Wie aus Figur 1 ersichtlich, wird das Kohlendioxid über ein kurzes als Rohrleitung ausgebildetes zweites Verbindungselement 145 und einer Auslassöffnung 153 einer Abtrennungseinrichtung 190 zugeführt. Gemäß dem hier dargestellten Ausführungsbeispiel ist die Abtrennungseinrichtung ein Kompressor 190, mit dem das Kohlendioxid verflüssigt wird.

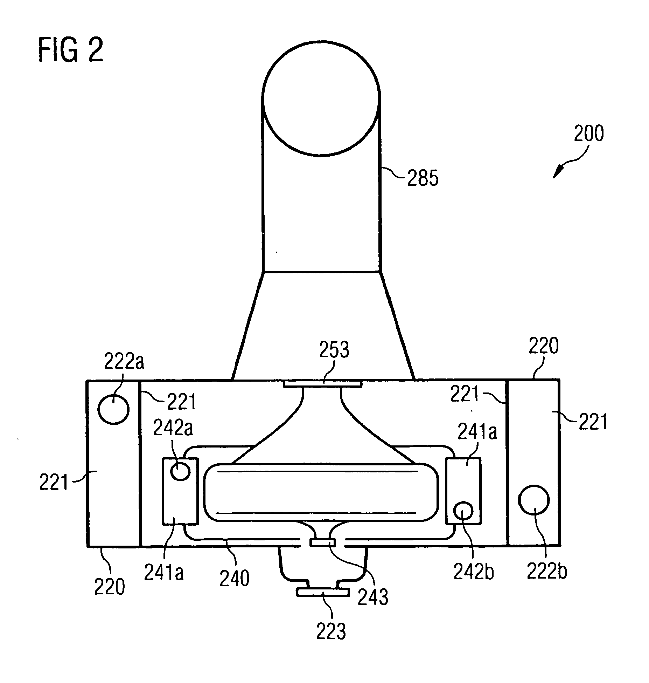

Figur 2 zeigt in einer Querschnittsdarstellung die in Figur 1 dargestellte Gasabtrennungsvorrichtung, welche nunmehr mit dem Bezugszeichen 200 gekennzeichnet ist.

Das Gasgemisch aus Wasserdampf und Kohlendioxid tritt über die Rohrleitung 285 in den Hauptkühler 220 ein. In dem Hauptkühler 220 kondensiert ein Teil des Wasserdampfes an der gekühlten Oberfläche 221 eines Kühlblockes 221a. Der Kühlblock 221a weist eine Einlassöffnung 222a und eine Auslassöffnung 222b für eine Kühlflüssigkeit auf. Das kondensierte Wasser tritt über eine Auslassöffnung 223 aus.

Über ein in Figur 2 nicht dargestelltes pneumatisches Verbindungselement ist der Hauptkühler 220 mit einem Nachkühler 240 verbunden. Gemäß dem hier dargestellten Ausführungsbeispiel weist dieses pneumatische Verbindungselement einen in Flussrichtung sich stetig verjüngenden Querschnitt auf. Diese Verjüngung ist dabei derart ausgebildet, dass das Zwischengemisch auf dem Weg von dem Hauptkühler 220 zu dem Nachkühler 240 eine zumindest annähernd konstante Strömungsgeschwindigkeit aufweist. Die Querschnittsfläche des Eintrittsstutzens des Nachkühlers 240 beträgt gemäß dem hier dargestellten Ausführungsbeispiel ca. 10-15% der Querschnittsfläche des Austrittsstutzens des Hauptkühlers 220. Auf diese Weise entsteht zwischen Hauptkühler 220 und Nachkühler 240 ein Strömungswiderstand, so dass in den beiden Kühlern 220 und 240 unterschiedlichen Arbeitsdrücke aufgebaut werden.

Der Nachkühler weist ebenfalls einen Kühlblock auf, welcher in Figur 2 mit dem Bezugszeichen 241a versehen ist. In dem Kühlblock 241a sind ebenfalls eine Einlassöffnung 242a und eine Auslassöffnung 242b für Kühlflüssigkeit vorhanden. Über eine Auslassöffnung 243 kann das in dem Nachkühler 240 erzeugte flüssige Kondensat abgeführt werden. Über eine Auslassöffnung 253 kann das noch in Gasform vorhandene Kohlendioxid, welches durch den beschriebenen zweistufigen Kondensationsvorgang auf effektive Weise getrocknet wurde, abgetrennt werden. Die nachfolgende Verflüssigung des Kohlendioxids erfolgt wie oben im Zusammenhang mit Figur 1 beschrieben, mit einem in Figur 2 nicht dargestellten Kompressor.

## Patentansprüche

1. Verfahren zum Abtrennen einer ersten Gaskomponente (111) aus einem Gasgemisch (110), welches neben der ersten Gaskomponente (111) zumindest noch eine zweite Gaskomponente (112) aufweist, das Verfahren aufweisend
• Zuführen des Gasgemisches (110) zu einer ersten Verflüssigungseinrichtung (120),
• Kondensieren eines Teils der zweiten Gaskomponente (112) in der ersten Verflüssigungseinrichtung (120) bei einem ersten Druck zum Erhalten eines ersten Kondensats (112a), so dass ein Zwischengasgemisch (130) entsteht, bei dem der Anteil der ersten Gaskomponente (111) in Bezug zu dem Anteil der ersten Gaskomponente (111) in dem ursprünglichen Gasgemisch (110) erhöht ist,
• Weiterleiten des Zwischengasgemisches (130) von der ersten Verflüssigungseinrichtung (120) zu einer zweiten Verflüssigungseinrichtung (140),
• Kondensieren zumindest eines weiteren Teils der zweiten Gaskomponente (112) in der zweiten Verflüssigungseinrichtung (140) bei einem zweiten Druck, welcher kleiner ist als der erste Druck, zum Erhalten eines zweiten Kondensats (112b) und
• Abtrennen der ersten Gaskomponente (111) von der in der zweiten Verflüssigungseinrichtung (140) kondensierten zweiten Gaskomponente (112b),
wobei das erste Kondensat (112a) und/oder das zweite Kondensat (112b) in einen regenerativen Enthitzer (180) rückgeführt wird, um dem Gasgemisch (110) Wärme zu entziehen, wobei das Gasgemisch aus dem regenerativen Enthitzer (180) der ersten Verflüssigungseinrichtung (120) zugeführt wird, wobei der zweite Druck niedriger als der Umgebungsdruck ist, wobei der erste Druck niedriger als der Umgebungsdruck ist, wobei das Verfahren zusätzlich aufweist:
wobei die zweite Gaskomponente gasförmiges Wasser (112) ist,
wobei die erste Gaskomponente (111) Kohlendioxid (CO2) ist.

2. Verfahren nach dem vorgehenden Anspruch, wobei das Kondensieren eines Teils der zweiten Gaskomponente (112) und/oder
das Kondensieren des zumindest einen weiteren Teils der zweiten Gaskomponente (112)
an einer gekühlten Oberfläche (121, 141) erfolgt.

3. Verfahren nach einem der vorgehenden Ansprüche, zusätzlich aufweisend:
• Weiterleiten der abgetrennten ersten Gaskomponente zu einer dritten Verflüssigungseinrichtung, wobei die abgetrennte erste Gaskomponente zumindest noch einen Teil der zweiten Gaskomponente enthält,
• Kondensieren zumindest noch eines weiteren Teils der zweiten Gaskomponente in der dritten Verflüssigungseinrichtung bei einem dritten Druck, welcher kleiner ist als der zweite Druck, und
• Abtrennen der ersten Gaskomponente von der in der dritten Verflüssigungseinrichtung kondensierten zweiten Gaskomponente.

4. Verfahren nach einem der vorgehenden Ansprüche, wobei das Gasgemisch (110) durch eine Verbrennung von Oxyfuel erzeugt wird.

## Claims

1. Method for separating a first gas component (111) from a gas mixture (110) which, in addition to the first gas component (111), also has at least one second gas component (112), the method comprising
• supplying the gas mixture (110) to a first liquefaction device (120),
• condensing a part of the second gas component (112) in the first liquefaction device (120) at a first pressure for the purpose of obtaining a first condensate (112a) such that an intermediate gas mixture (130) is produced in which the fraction of the first gas component (111) is increased in relation to the fraction of the first gas component (111) in the original gas mixture (110),
• forwarding the intermediate gas mixture (130) from the first liquefaction device (120) to a second liquefaction device (140),
• condensing at least a further part of the second gas component (112) in the second liquefaction device (140) at a second pressure which is less than the first pressure in order to obtain a second condensate (112b), and
• separating off the first gas component (111) from the second gas component (112b) condensed in the second liquefaction device (140),
wherein the first condensate (112a) and/or the second condensate (112b) are/is returned to a regenerative deheater (180) in order to extract heat from the gas mixture (110), wherein the gas mixture from the regenerative deheater (180) is supplied to the first liquefaction device (120),
wherein the second pressure is lower than the ambient pressure,
wherein the first pressure is lower than the ambient pressure, wherein the method additionally comprises:
wherein the second gas component is gaseous water (112),
wherein the first gas component (111) is carbon dioxide (C02).

2. Method according to the preceding claim, wherein
the condensing of a part of the second gas component (112) and/or
the condensing of the at least one further part of the second gas component (112)
are/is effected on a cooled surface (121, 141).

3. Method according to one of the preceding claims, additionally comprising:
• forwarding the separated-off first gas component to a third liquefaction device, wherein the separated-off first gas component also contains at least a part of the second gas component,
• condensing at least also a further part of the second gas component in the third liquefaction device at a third pressure which is less than the second pressure, and
• separating off the first gas component from the second gas component condensed in the third liquefaction device.

4. Method according to one of the preceding claims, wherein the gas mixture (110) is produced by combusting oxyfuel.

## Revendications

1. Procédé pour séparer un premier composant gazeux (111) d'un mélange gazeux (110) contenant, outre le premier composant gazeux (111), au moins encore un deuxième composant gazeux (112), le procédé comprenant
• l'acheminement du mélange gazeux (110) jusqu'à un premier dispositif de liquéfaction (120),
• la condensation d'une partie du deuxième composant gazeux (112) dans le premier dispositif de liquéfaction (120) à une première pression pour obtenir un premier condensat (112a), de sorte qu'il se forme un mélange gazeux intermédiaire (130) dans lequel la proportion du premier composant gazeux (111) est augmentée par rapport à la proportion du premier composant gazeux (111) dans le mélange gazeux d'origine (110) ;
• le réacheminement du mélange gazeux intermédiaire (130) du premier dispositif de liquéfaction (120) jusqu'à un deuxième dispositif de liquéfaction (140),
• la condensation au moins d'une autre partie du deuxième composant gazeux (112) dans le deuxième dispositif de liquéfaction (140) à une deuxième pression, inférieure à la première pression, pour obtenir un deuxième condensat (112b), et
• la séparation du premier composant gazeux (111) du deuxième composant gazeux (112b) condensé dans le deuxième dispositif de liquéfaction (140),
le premier condensat (112a) et/ou le deuxième condensat (112b) étant recyclé dans un désurchauffeur régénératif (180) pour extraire de la chaleur du mélange gazeux (110),
le mélange gazeux étant acheminé du désurchauffeur régénératif (180) jusqu'au premier dispositif de liquéfaction (120),
la deuxième pression étant inférieure à la pression ambiante,
la première pression étant inférieure à la pression ambiante,
le deuxième composant gazeux étant de l'eau à l'état gazeux (112),
le premier composant gazeux (111) étant du dioxyde de carbone (CO2).

2. Procédé selon la revendication précédente,
la condensation d'une partie du deuxième composant gazeux (112) et/ou
la condensation de l'au moins une autre partie du deuxième composant gazeux (112)
s'effectuant sur une surface refroidie (121, 141).

3. Procédé selon l'une des revendications précédentes, comprenant en outre
• le réacheminement du premier composant gazeux séparé jusqu'à un troisième dispositif de liquéfaction, le premier composant gazeux séparé contenant au moins encore une partie du deuxième composant gazeux,
• la condensation au moins encore d'une autre partie du deuxième composant gazeux dans le troisième dispositif de liquéfaction à une troisième pression, inférieure à la deuxième pression, et
• la séparation du premier composant gazeux du deuxième composant gazeux condensé dans le troisième dispositif de liquéfaction.

4. Procédé selon l'une des revendications précédentes,
le mélange gazeux (110) étant obtenu par une combustion d'oxyfuel.
